# EUROPÄISCHE PATENTSCHRIFT

(11) **EP 0 800 434 B1**
(45) Veröffentlichungstag und Bekanntmachung des Hinweises auf die Patenterteilung: **17.02.1999**
(21) Anmeldenummer: 95936954.7
(22) Anmeldetag: 23.11.1995
(51) Int. Cl.: B23K 26/14

(54) **VERFAHREN ZUM SCHWEISSEN VON WERKSTÜCKEN MIT LASERSTRAHLUNG**
METHOD OF WELDING WORKPIECES USING A LASER BEAM
PROCEDE DE SOUDAGE DE PIECES PAR FAISCEAU LASER

(30) Priorität: 24.12.1994 DE 4446560
(43) Veröffentlichungstag der Anmeldung: 15.10.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: MAIER, Christof, D-52070 Aachen (DE)
(86) Internationale Anmeldenummer: DE9501635
(87) Internationale Veröffentlichungsnummer: WO9620063

(56) Entgegenhaltungen:
- US-A- 4 167 662

## Beschreibung

Die Erfindung bezieht sich auf ein Verfahren zum Schweißen von Werkstücken mit Laserstrahlung, die auf das relativbewegte Werkstück fokussiert wird und eine Verdampfung von Werkstoff bewirkt, wobei außer der Laserstrahlung ein Lichtbogen im Bereich des mit Laserstrahlung beaufschlagten Werkstücks eingesetzt wird (Siehe z.B. US-A-4 167 662).

Verfahren mit den vorgenannten Verfahrensschritten sind allgemein als Laserstrahl-Hybridschweißen bekannt und werden beispielsweise zum Schweißen von Blechen eingesetzt. An der durch den Laserstrahl bestimmten Schweißstelle wird nicht nur Energie mit Hilfe der Laserstrahlung eingekoppelt, sondern zusätzlich auch mit Hilfe des Lichtbogens. Dabei tritt eine selbsttätige Führung des Lichtbogens von seiner Elektrode zum durch den Laserstrahl bestimmten Schweißbereich auf. Diese Führung, oder sogar eine Kontraktion des Lichtbogens kann durch mehrere Phänomene erklärt werden. Wenn die Laserstrahlung die Oberfläche des Werkstücks lediglich aufheizt, ohne das Verdampfung von Metall auftritt, so erzeugen thermisch erzeugte Elektronen eine Lokalerhöhung der elektrischen Leitfähigkeit statt, die zu thermisch erzeugten Elektronen führt. Es ergibt sich ein entsprechendes elektrisches Feld, welches zur Führung des Lichtbogens beiträgt. Wenn durch die Laserstrahlung Metall verdampft wird, verändert sich die Plasmazusammensetzung und durch die vergleichsweise niedrige Ionisierungsenergie des Metalldampfes bildet sich ein Pfad erhöhter Leitfähigkeit für den Lichtbogen. Außerdem tritt Wechselwirkung zwischen der Laserstrahlung und durch Ionisation gebildetem Plasma auf. Den physikalischen Parametern und der Geometrie der Werkstücke entsprechend ist die Führung des Lichtbogens mehr oder weniger stark. Für technische Anwendungen sind stabile Lichtbögen hoher Leistungsdichte gefordert.

Dementsprechend liegt der Erfindung die Aufgabe zugrunde, ein Verfahren mit den eingangs genannten Verfahrensschritten so zu verbessern, daß die Führung des Lichtbogens im Sinne stabiler Lichtbögen hoher Leistungsdichte verbessert wird.

Diese Aufgabe wird dadurch gelöst, daß ein Werkstück mit einer den Lichtbogen führenden dielektrikumsfreien Oberflächenspur in einer den übrigen Schweißbereich durchweg bedekkenden dielektrischen Schicht verwendet wird.

Bei dem vorbeschriebenem Verfahren wird die Leitfähigkeit auf der Werkstückoberfläche durch das Aufbringen der dielektrischen Schicht herabgesetzt. Die dielektrische Schicht wirkt als Isolator. Der Lichtbogen wird nicht ohne weiteres in einem Oberflächenbereich des Werkstücks mit dielektrischer Schicht fußen. Er wird vielmehr dazu tendieren, seinen Auftreffpunkt auf der Werkstückoberfläche im durch die Laserstrahlung bestimmten Bearbeitungsbereich des Werkstücks zu haben.

Besonders vorteilhaft ist es, das Verfahren so zu betreiben, daß das Werkstück aus einer Aluminiumlegierung besteht und als dielektrische Schicht die Oxidschicht des Werkstücks verwendet wird. Das Aluminium bzw. die Aluminiumlegierung bildet vergleichsweise schnell nach der Formung des Werkstücks eine Oxidschicht aus, die ein dielektrisches Verhalten zeigt und als dielektrische Schicht im Sinne der Erfindung eingesetzt werden kann. Demgegenüber ist es durch WELDING JOURNAL, Juni 1984, S.18 ff. bekannt, vor dem Schweißen die Oberfläche der Prüflinge bzw. Werkstücke zu bürsten und zu reinigen, um Oxide und Rückstände zu beseitigen. Im Rahmen der vorliegenden Erfindung ist es also von Bedeutung erkannt zu haben, daß es entgegen der bisherigen Gepflogenheit beim Schweißen möglich ist, die vorhandene Oxidschicht im Sinne einer Führung des Lichtbogens auf der Schweißbahn auszunutzen.

Es ist nicht notwendig, dielektrische Schichten auf Werkstücken natürlich aufwachsen zu lassen. Es ist vielmehr auch möglich, das Verfahren so durchzuführen, daß die dielektrische Schicht im Schweißbereich auf das Werkstück, bedarfsweise unter Ausnahme der den Lichtbogen führenden Spur, vor dem Schweißen aufgetragen wird. Das Auftragen kann ohne weiteres künstlich erfolgen, also mit der durch die Oberflächenspur benötigten Struktur. Die dielektrische Schicht kann beispielsweise im Siebdruckverfahren so aufgebracht werden, daß die benötigte dielektrikumsfreie bzw. blanke Oberflächenspur nicht mitbedruckt wird.

Es ist aber auch möglich, so zu verfahren, daß die den Lichtbogen führende Spur der dielektrischen Schicht vor dem Schweißen durch thermische, mechanische oder chemische Mittel vom Dielektrikum befreit wird. Die Zahl der dazu geeigneten thermischen, mechanischen und chemischen Mitteln ist groß. Beispielsweise kann ein spezieller, auf die Spurbreite abgestimmter Laserstrahl eingesetzt werden, der vor der Bearbeitungsstelle herläuft. Durch Veränderung seines Strahlflecks und der daraus resultierenden sich ändernden Spurbreite kann die Wärmeeinkopplung an der Oberfläche des Werkstücks konzentriert oder verbreitert werden, je nachdem, wie es die Struktur des Werkstücks erfordert. Als mechanische Mittel kommen beispielsweise dem Spurverlauf entsprechend geführte Bürsten in Frage. Das Oxid reduzierende Hilfsstoffe können als chemische Mittel zum Einsatz kommen, in dem sie beispielsweise auf das Blech aufgetragen oder einem Schutzgas beigemischt werden. Die Aktivierungsenergie kann durch den Lichtbogen selbst zur Verfügung gestellt werden, so daß bei einer schmalen Spur Reduktionsmittel eine entsprechende Führung und Kontraktion des Lichtbogens erfolgen kann.

In der Regel wird das Verfahren jedoch so durchgeführt, daß die dielektrische Schicht des Werkstücks mit der Laserstrahlung im Bereich der den Lichtbogen führenden Spur entfernt wird.

Vorteilhafte Schweißergebnisse lassen sich erzielen, wenn das Verfahren so durchgeführt wird, daß mit der Laserstrahlung während ihrer zum Werkstück relativen Bewegung auf der den Lichtbogen führenden Spur einen Dampfkanal im Werkstück ausbildet. Mit Hilfe der dielektrischen Schicht Kann die Sicherheit der Führung des Stromflusses des Lichtbogens verbessert und dieser so kontrahiert werden, daß die Energiedichte des Lichtbogens im Vergleich zum herkömmlichen Laserstrahl-Hybridschweißen zum Werkstück hin gesteigert wird. Durch die Steigerung der Energiedichte des Lichtbogens läßt sich eine Steigerung der Schweißgeschwindigkeit erzielen. Wird dieses Verfahren bei einem Werkstück aus Aluminium angewendet, so ergibt sich eine erhebliche Verbesserung der Qualität der Schweißnaht. Insbesondere werden sonst infolge vor. Schmelzauswürfen häufig auftretende Löcher wirkungsvoll unterbunden.

Wenn zum Schweißen Laserstrahlung mit kurzer Wellenlänge, insbesondere eines Nd:YAG-Lasers, eingesetzt wird, ergibt sich eine erhebliche Verbesserung der Sicherheit der Führung des Stromflusses zur laserinduzierten Dampfkapillare.

Um zu einem einfachen Werkzeugaufbau zu kommen, wird das Verfahren so durchgeführt, daß eine der die dielektrische Schicht entfernenden Laserstrahlung dicht benachbart nachlaufende Lichtbogenelektrode verwendet wird. Die Synergieeffekte durch die fokussierte Laserstrahlung und den konzentrierten Lichtbogen sind dann besonders stark. In diesem Sinne wird das Verfahren so durchgeführt, daß die Lichtbogenelektrode mit einer laserstrahlungsnah abgeschrägten Schutzgasdüse verwendet wird.

Es ist vorteilhaft, das Verfahren so durchzuführen, daß der Lichtbogen mit Gleichstrom oder mit Wechselstrom mit weit überwiegendem Gleichstromanteil betrieben wird. Bei entsprechender Polung des Werkstücks bzw. der Elektrode ergibt sich dann die Möglichkeit, die negativen Effekte von Wechselstromverfahren zu vermeiden, beispielsweise eine Verkürzung der Standzeit der Elektrode. Die Elektrode kann auch mit einem Wechselstrom betrieben werden, bei dem der Gleichstromanteil weit überwiegt. Auch dann sind die bei den bekannten Wechselstromverfahren negativen Effekte zu vermeiden, weil die positive Polung der Elektrode nicht benutzt werden muß, um die Oxidschicht aufzubrechen, wie sie z.B. bei Werkstücken aus Aluminium vorhanden ist.

Die Erfindung wird anhand von in der Zeichnung dargestellten Ausführungsbeispielen erläutert. Es zeigt:
- Fig.1: eine Querschnittsdarstellung einer Bearbeitungsstelle eines Werkstücks mit einer dem Laserstrahl in relativer Vorschubrichtung nachgeführten Elektrode,
- Fig.2: eine Darstellung der Anordnung der Fig.1 um 90° gedreht in Richtung der relativen Vorschubrichtung,
- Fig.3: eine der Fig.1 ähnliche Darstellung zur Veranschaulichung des Aufbaus des werkstückbearbeitenden Werkzeugs,
- Fig.4: eine der Fig.2 ähnliche Darstellung in relativer Vorschubrichtung,
- Fig.5a bis 5d: Schnittdarstellungen durch einen aus Edelstahl bestehendes Blech nach dem Einbringen einer Schweißnaht, und
- Fig.6a bis 6d: den Fig.5a bis 5d entsprechende Darstellungen für ein aus Aluminiumlegierung bestehendes Blech.

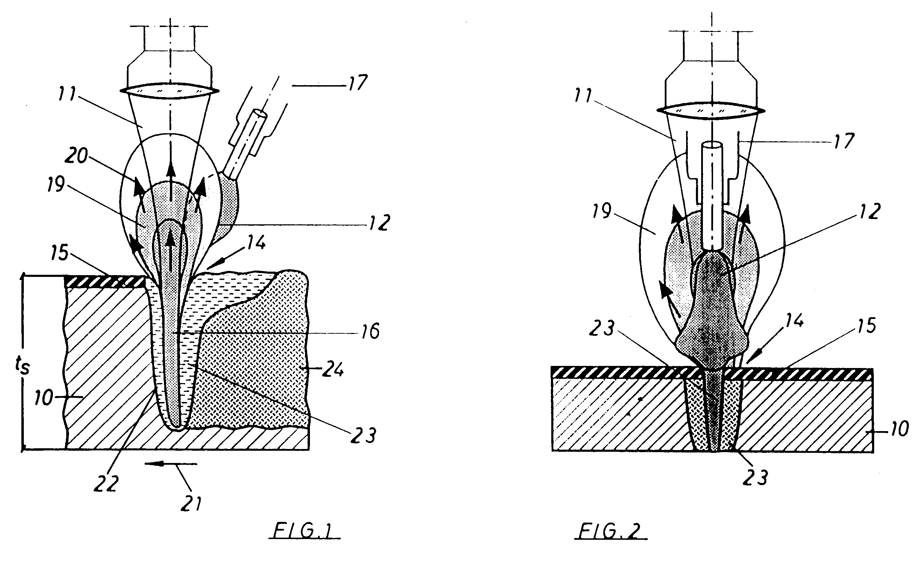

Fig.1 zeigt in schematischer Schnittdarstellung eine Vorrichtung zum Bearbeiten von Werkstücken 10 mit Laserstrahlung 11, die auf das Werkstück 10 fokussiert ist. Das Werkstück 10 ist schematisch dargestellt und beispielsweise ein 3 mm dickes Blech. Die Einschweißtiefe tₛ erstreckt sich praktisch über die gesamte Werkstückdicke, weil mit Hilfe der Laserstrahlung 11 ein Dampfkanal 16 ausgebildet wird. Der in diesem Bereich vorhandene Werkstoff des Werkstücks 10 wird unter Ausbildung eines Plasmas 19 verdampft und entweicht entsprechend den Pfeilen 20 aus dem Dampfkanal 16 nach oben. Es erfolgt ein relativer Vorschub zwischen dem Werkstück 10 und der Laserstrahlung 11 in der Richtung des Pfeils 21 derart, daß die Front 22 der Schmelzzone 23 nach links bewegt wird. Zwischen der Schmelzfront 22 und dem Dampfkanal 16 ist der Bereich der flüssigen Schmelze vergleichsweise schmal. Die flüssige Schmelze dieses Bereichs wird entweder verdampft oder weicht um den Dampfkanal 16 herum hinter diesen aus. Die hinter diesem Dampfkanal 16 befindliche flüssige Schmelze kühlt ab und erstarrt zu der festen Schmelze 24. Der Bereich der flüssigen Schmelze 23 hinter dem Dampfkanal 16 ist dem Erstarrungsverhalten entsprechend breit.

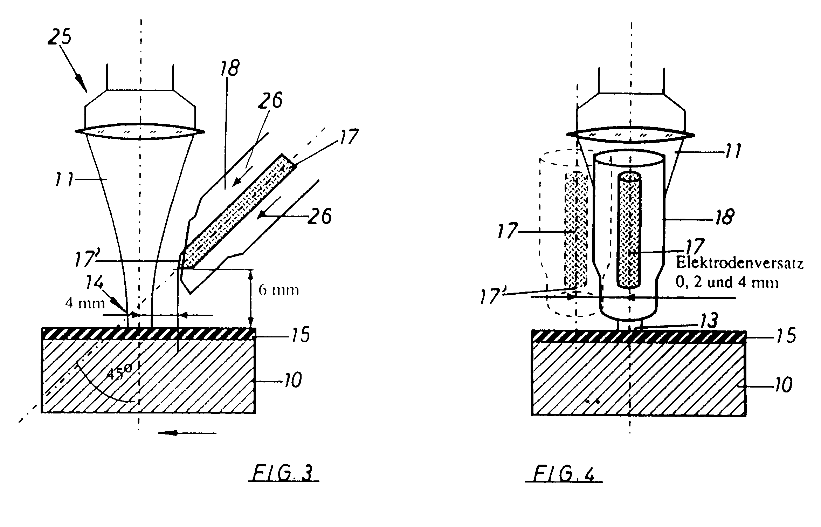

Fig.1 zeigt, daß eine Lichtbogenelektrode 17 verwendet wird, um einen Lichtbogen 12 zu erzeugen, der im Schweißbereich 14 des Werkstücks 10 gezündet ist. Als Gegenelektrode fungiert das Werkstück 10 und beide Elektroden werden von einer geeigneten Elektrodenspannung beaufschlagt. Zwischen ihnen entwickelt sich ein Lichtbogen 11, nämlich ionisiertes Gas. Dieses Gas oder Plasma des Lichtbogens 12 transportiert Energie in den Dampfkanal 16, da der Lichtbogen 12 im Schweißbereich 14 auf der Oberfläche des Werkstücks 10 bzw. im Dampfkanal 23 fußt. Dabei zeigt Fig.2 eine Form des Lichtbogens 12, die ein Zusammenschnüren veranschaulicht.

Die Konzentration des Lichtbogens 12 auf die durch die Laserstrahlung 11 bestimmte Werkstückoberfläche wird zum einen dadurch erreicht, daß von der Laserstrahlung 11 verdampftes Metall den für den Lichtbogen 12 widerstandsärmsten Weg definiert. Die betreffende Metalldampfsäule wird unter Einfluß des Lichtbogens selbst zu einem hochleitfähigen Kanal, durch den die Lichtbogeneffizienz gesteigert wird und eine Führung des Lichtbogens eintritt. Infolgedessen kann in den durch die Laserstrahlung erzeugten Dampfkanal mit dem Lichtbogen Energie eingebracht werden und die Absorption des Laserstrahls auf dem vorgeheizten Metall nimmt zu. Der Lichtbogen drückt dabei eine Vertiefung in die Schmelze, so daß die Laserstrahlung erst unterhalb des Niveaus des Werkstücks auf Schmelze trifft und somit insgesamt tiefer in das Werkstück eindringen kann.

Die spezielle Einschnürung des Lichtbogens oberhalb des Niveaus der Werkstückoberfläche wird durch eine dielektrische Schicht 15 erreicht. Diese dielektrische Schicht 15 wirkt als Isolator und verhindert, daß der Lichtbogen 12 dort fußt, wo sie vorhanden ist. Wenn die dielektrische Schicht 15 abgetragen wird, nämlich beispielsweise durch die Laserstrahlung 11, so ergibt sich freigelegtes Metall des Werkstücks, was in einer Überhöhung des elektrischen Feldes resultiert. Dieses erleichtert einerseits die Zündung des Lichtbogens und andererseits wird der Auftreffpunkt des Lichtbogens horizontal quer und halbseitig parallel zur relativen Vorschubrichtung fixiert.

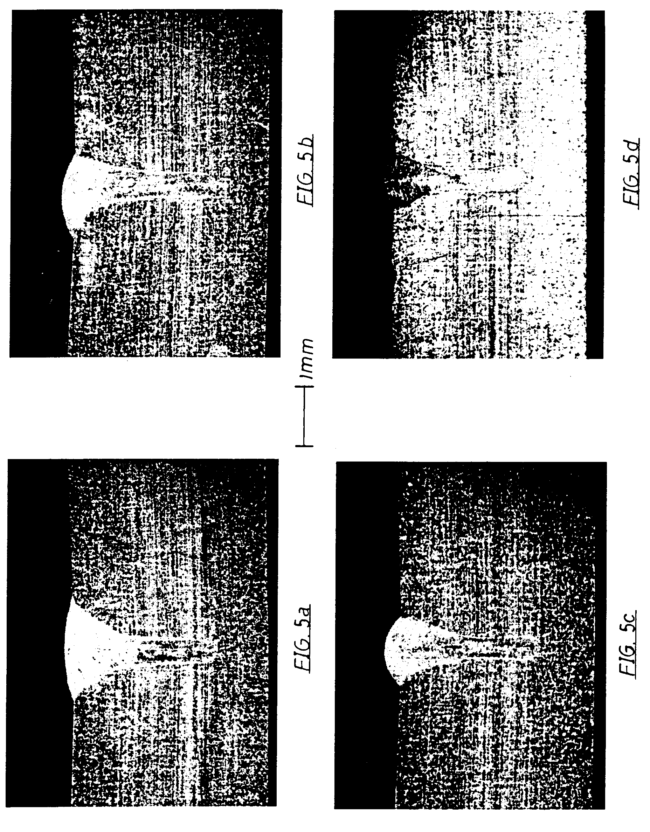

Anhand von Fig.3 kann erläutert werden, daß der Aufbau des Schweißwerkzeugs oberhalb des Werkstücks 10 sehr gedrängt ist. Das optische System 25 zur Fokussierung der Laserstrahlung 11 ist der Lichtbogenelektrode 17 dicht benachbart angeordnet, wobei der Abstand der Elektrodenspitze 17' von der vertikalen Achse der Laserstrahlung 11 nur etwa 1 bis 10 mm beträgt, während der Abstand zur Oxidschicht 15 ebenfalls nur etwa 1 bis 10 mm beträgt. Die Ausrichtung der Elektrode 17 erfolgt unter beispielsweise 45° derart, daß der Auftreffpunkt ihrer Achse dem Strahlfleck der Laserstrahlung 11 voreilt. Die Elektrode ist von einer Schutzgasdüse 18 ummantelt, mit der das Schutzgas 26 auf die Bearbeitungsstelle 14 geblasen wird.

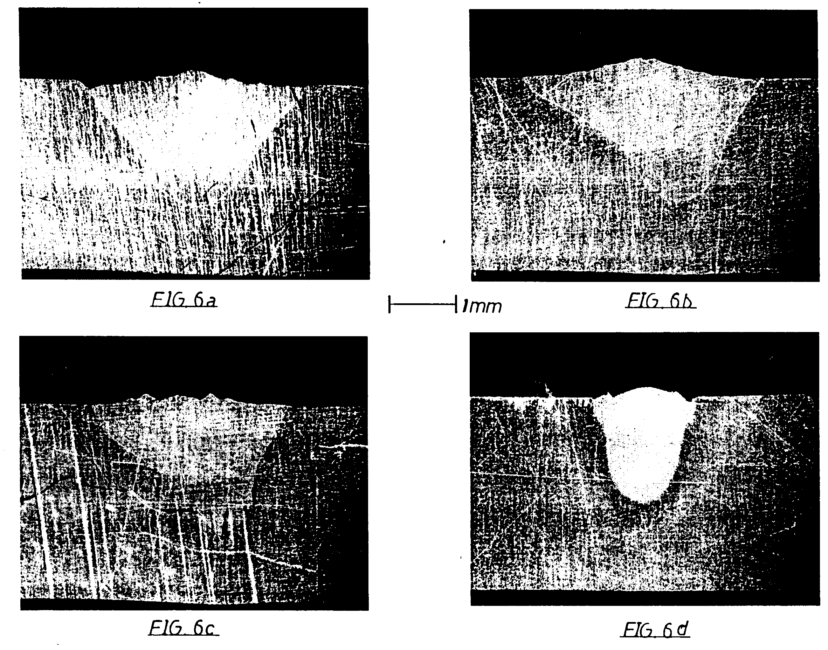

Der auf das Werkstück 10 auftreffende Strahlfleck der Laserstrahlung 11 bestimmt die dielektrikumsfreie Oberflächenspur 13 bezüglich ihrer Breite. Diese Spur 13 führt den Lichtbogen 12 und fußt ihn in dem durch den Strahlfleck bestimmten Schweißbereich 14. Anhand der Fig.4 ist ersichtlich, daß die Elektrode 18 mit Elektrodenversatz angeordnet werden kann. Da über der dielektrischen Schicht 15 ein Stromfluß erschwert und das elektrische Feld vermindert ist, bleibt die Lichtbogenführung über die dem Versatz entsprechend schief verlaufende Ionisationssäule stabil und der Lichtbogen wird auf der Spur 13 geführt und dahin zusammengezogen. Infolgedessen kann mit dem Abtragen der dielektrischen Schicht 15 durch die Laserstrahlung 11 eine Führung des Lichtbogens 12 erreicht werden. Die Führung ist so gut, daß man in der Positionierung der Elektrode 17 weitgehend frei ist. Sie kann vor, hinter oder seitlich der Laserstrahlung angeordnet werden und muß lediglich in den werkstücknahen Bereich der von der dielektrischen Schicht 15 befreiten Metalloberfläche und der durch die Laserstrahlung 11 erzeugten Metalldampfsäule gebracht werden. Dabei muß lediglich darauf geachtet werden, daß die Laserstrahlung 11 von der Elektrode 17 nicht abgeschattet wird.

In den Fig.5a bis 5d sind schematisierte Querschliffe von Einschweißungen in 3 mm dicke Bleche aus Edelstahl dargestellt. Als Laserstrahlquelle wurde ein 2kW-cw-Nd:YAG-Laser verwendet. Sämtliche Figuren zeigen einen Tiefschweißeffekt der Laserstrahlung infolge der Ausbildung eines Dampfkanals während des Verfahrens. Fig.5d zeigt eine Schweißnaht, die nur mit Laserstrahlung hergestellt wurde. Die Fig.5a bis 5c wurden hingegen hergestellt, indem zusätzlich ein Lichtbogen angewendet wurde. Der Lichtbogenstrom wurde auf 200 A eingestellt. Die Fig.5a bis 5c unterscheiden sich durch eine Versetzung der Elektrode 17 seitlich zur Vorschubrichtung gemäß Fig.4. Die Versetzung in Fig.5a ist 0 mm, in Fig.5b 2 mm und in Fig.5c 4 mm. Im Vergleich zu Fig.5d ist bei allen Darstellungen der Fig.5a bis 5c ein oberflächennaher bauchiger Bereich erkennbar, der infolge der Erwärmung der Werkstückoberfläche durch den Lichtbogen ausgebildet wurde. Der bauchige Bereich wird zunehmend kleiner, je größer die seitliche Versetzung der Elektrode ist. Die aufgeschmolzene Querschnttsfläche nimmt mit zunehmender seitlicher Versetzung der Elektrode ab. Das hat seinen Grund in der bei dem Edelstahl praktisch nicht vorhandenen Oxidschicht. Die Laserstrahlung 11 erzeugt auf ihrer Bahn keine im Vergleich zum benachbarten Schweißbereich vergleichsweise entschieden dielektrikumsfreiere Oberflächenspur. Es resultiert keine Überhöhung eines elektrischen Feldes und dementsprechend wird der Lichtbogen nicht geführt und nicht kontrahiert. Er fußt vielmehr im wesentlichen in einem vertikal dicht benachbarten Bereich der Elektrodenspitze 17', ungehindert durch eine Oxidschicht bzw. einer dielektrischen Schicht 15. Bei der Schweißung gemäß Fig.5c zeichnete sich der Fußpunkt des Lichtbogens mit deutlichem Versatz neben der durch den Laser erzeugten Naht ab. Dies ist im Querschnitt jedoch nicht sichtbar, da hier der Energieeintrag des Lichtbogens nicht zu einer Aufschmeldung führt.

Die Fig.6a bis 6d zeigen schematisierte Querschliffe von Einschweißungen in 3 mm Dicke, unbehandelte AlMg3-Bleche. Die übrigen Parameter sind dieselben, wie bei den Schweißungen gemäß den Fig.5a bis 5d. Die Fig.6d stellt die reine Laserschweißung dar. Bei den Fig.6a bis 6c ergibt sich im Vergleich zu Fig.6d eine deutliche Vergrößerung des aufgeschmolzenen AlMg3-Volumens. Dieses Volumen entspricht bei den Fig. 6a bis 6b etwa den zweifachen und in Fig.6c etwa dem 1,7fachen des Schmelzvolumens der reinen Lasernaht gemäß Fig.6d. Dieses geringfügig verkleinerte Schmelzvolumen bei 4 mm Elektrodenversatz wird durch unregelmäßige, kurzzeitige Überschläge des Lichtbogens auf das Blech direkt unterhalb der Elektrode verursacht. In allen Fig.6a bis 6c ist erkennbar, daß der bauchige Bereich und der tief eindringende schlanke Bereich infolge der Ausbildung eines Dampfkanals einander überlagern. Zwar ist der bauchige Bereich tendenziell in Richtung der versetzten Elektrode verschoben, was bedeutet, daß der Lichtbogen auch Einfluß außerhalb des durch die Laserstrahlung bestimmten Nahtbereichs hat. Die Verschiebung ist doch angesichts des erheblichen aufgeschmolzenen Volumens vergleichsweise gering, weil der Lichtbogen von der Elektrodenachse seitlich zur Laserschweißnaht hin abgelenkt wird, wenn die Elektrode versetzt angeordnet ist.

Aus diesen Schweißergebnissen ist zu schließen, daß sich das erfindungsgemäße Verfahren für alle Metallwerkstücke eignet, dessen Oberfläche eine dielektrische Schicht aufweist. Diese Schicht kann durch natürliches Aufwachsen vorhanden sein, wie es insbesondere im Falle von Aluminium durch Oxidation möglich ist, sie kann aber auch mit Hilfe von Oxidationsmitteln aufgewachsen werden oder künstlich aufgetragen werden.

Bei der Durchführung der Schweißungen der Fig.5a bis 5d und 6a bis 6d wurde Gleichspannung eingesetzt, bei der die Elektrode 17 negativ gepolt war. Infolgedessen wurde eine effiziente Einkopplung von Energie in das Werkstück erreicht. Eine positive Polung der Elektrode konnte vermieden werden, weil die dielektrische Schicht 15 nicht aufgebrochen werden mußte, sondern durch die Laserstrahlung 11 abgetragen wurde. Im Bereich der vom Dielektrikum befreiten Oberflächenspur ergab sich eine Überhöhung des elektrischen Feldes zur Zündung und nachfolgenden Führung und Kontraktion des Lichtbogens 12.

## Patentansprüche

1. Verfahren zum Schweißen von Werkstücken (10) mit Laserstrahlung, die auf das relativbewegte Werkstück (10) fokussiert wird und eine Verdampfung von Werkstoff bewirkt, wobei außer der Laserstrahlung (11) ein Lichtbogen (12) im Bereich des mit Laserstrahlung beaufschlagten Werkstücks (10) eingesetzt wird, **dadurch gekennzeichnet,** daß ein Werkstück (10) mit einer den Lichtbogen (12) führenden dielektrikumsfreien Oberflächenspur (13) in einer den übrigen Schweißbereich (14) durchweg bedeckenden dielektrischen Schicht (15) verwendet wird.

2. Verfahren nach Anspruch 1, **dadurch gekennzeichnet**, daß das Werkstück (10) aus einer Aluminiumlegierung besteht und als dielektrische Schicht (15) die Oxidschicht des Werkstücks (10) verwendet wird.

3. Verfahren nach Anspruch 1, **dadurch gekennzeichnet**, daß die dielektrische Schicht (15) im Schweißbereich (14) auf das Werkstück (10), bedarfsweise unter Ausnahme der den Lichtbogen (12) führenden Spur (13), vor dem Schweißen aufgetragen wird.

4. Verfahren nach Anspruch 3, d**adurch gekennzeichnet**, daß die den Lichtbogen (12) führende Spur (13) der dielektrischen Schicht (15) vor dem Schweißen durch thermische, mechanische oder chemische Mittel vom Dielektrikum befreit wird.

5. Verfahren nach Anspruch 1 oder 2, **dadurch gekennzeichnet**, daß die dielektrische Schicht (15) des Werkstücks (10) mit der Laserstrahlung (11) im Bereich der den Lichtbogen (12) führenden Spur (13) entfernt wird.

6. Verfahren nach einem oder mehreren der Ansprüche 1 bis 5, **dadurch gekennzeichnet**, daß mit der Laserstrahlung (11) während ihrer zum Werkstück (10) relativen Bewegung auf der den Lichtbogen (12) führenden Spur (13) einen Dampfkanal (16) im Werkstück (10) ausbildet.

7. Verfahren nach einem oder mehreren der Ansprüche 1 bis 6, **dadurch gekennzeichnet**, daß zum Schweißen Laserstrahlung (11) mit kurzer Wellenlänge, insbesondere eines Nd:YAG-Lasers, eingesetzt wird.

8. Verfahren nach einem oder mehreren der Ansprüche 1 bis 7, **dadurch gekennzeichnet**, daß eine der die dielektrische Schicht (15) entfernenden Laserstrahlung (11) dicht benachbart nachlaufende Lichtbogenelektrode (17) verwendet wird.

9. Verfahren nach Anspruch 8, **dadurch gekennzeichnet**, daß die Lichtbogenelektrode (17) mit einer laserstrahlungsnah abgeschrägten Schutzgasdüse (18) verwendet wird.

10. Verfahren nach einem oder mehreren der Ansprüche 1 bis 9, **dadurch gekennzeichnet**, daß der Lichtbogen (12) mit Gleichstrom oder mit Wechselstrom mit weit überwiegendem Gleichstromanteil betrieben wird.

## Claims

1. A method of welding workpieces (10) using laser radiation, which is focused on the relatively moved workpiece (10) and effects vaporisation of material, wherein an arc (12) is employed in addition to the laser radiation (11) in the region of the workpiece (10) acted on by the laser radiation, characterized in that a workpiece (10) with a surface track (13) free from dielectric, guiding the arc (12) is used in a dielectric layer (15) covering the rest of the welding region (14) throughout.

2. A method according to claim 1, characterized in that the workpiece (10) consists of an aluminium alloy and the oxide layer of the workpiece (10) is used as the dielectric layer (15).

3. A method according to claim 1, characterized in that the dielectric layer (15) is applied to the workpiece (10) in the welding region (14) before the welding, optionally with the exception of the track (13) guiding the arc (12).

4. A method according to claim 3, characterized in that the track (13) of the dielectric layer (15) guiding the arc (12) is freed from the dielectric before the welding by thermal, mechanical or chemical means.

5. A method according to claim 1 or 2, characterized in that the dielectric layer (15) of the workpiece (10) is removed by the laser radiation (11) in the region of the track (13) guiding the arc (12).

6. A method according to one or more of claims 1 to 5, characterized in that a vapour channel (16) is formed in the workpiece with the laser radiation (11) during its movement relative to the workpiece (10) on the track (13) guiding the arc (12).

7. A method according to one or more of claims 1 to 6, characterized in that laser radiation (11) with a short wavelength, especially a Nd:YAG laser is used for the welding.

8. A method according to one or more of claims 1 to 7, characterized in that an arc electrode (17) closely following the laser beam (11) removing the dielectric layer (15) is used.

9. A method according to claim 8, characterized in that the arc electrode (17) is used with a protective gas nozzle (18) bevelled off near the laser beam.

10. A method according to one or more of claims 1 to 9, characterized in that the arc (12) is operated with direct current or with alternating current with a far predominant direct current proportion.

## Revendications

1. Procédé servant à souder des pièces (10) avec un faisceau laser, qui est focalisé sur la pièce (10),animée d'un mouvement relatif, et provoque une vaporisation de la matière, en utilisant en plus du faisceau laser (11) un arc électrique (12) dans la zone de la pièce (10) qui est soumise au faisceau laser,
caractérisé en ce qu'
on utilise une pièce (10) qui a une trace superficielle (13), exempte de diélectrique, qui guide l'arc électrique (12) dans une couche (15) diélectrique recouvrant sans exception le reste de la zone de soudage (14).

2. Procédé selon la revendication 1,
caractérisé en ce que
la pièce (10) est constituée par un alliage d'aluminium et en ce que l'on utilise comme couche diélectrique (15) la couche d'oxyde de la pièce (10).

3. Procédé selon la revendication 1,
caractérisé en ce que
l'on applique avant le soudage la couche diélectrique (15) dans la zone du soudage (14) sur la pièce (10) à l'exception en cas de besoin de la trace (13), qui guide l'arc électrique (12).

4. Procédé selon la revendication 3,
caractérisé en ce que
la trace (13), qui guide l'arc électrique (12), de la couche diélectrique (15) est libérée du diélectrique avant le soudage par des moyens thermique, mécanique ou chimique.

5. Procédé selon la revendication 1 ou 2,
caractérisé en ce que
la couche diélectrique (15) de la pièce (10) est enlevée par le faisceau laser (11) dans la zone de la trace (13), qui guide l'arc électrique (12).

6. Procédé selon l'une des revendications 1 à 5,
caractérisé en ce qu'
on forme un canal de vapeur (16) dans la pièce (10) avec le faisceau laser (11) pendant son mouvement relatif par rapport à la pièce (10) sur la trace (13), qui guide l'arc électrique (12).

7. Procédé selon l'une des revendications 1 à 6,
caractérisé en ce que
pour le soudage on utilise un faisceau laser (11) avec une courte longueur d'onde, en particulier un laser Nd:YAG.

8. Procédé selon l'une des revendications 1 à 7,
caractérisé en ce que
l'on utilise une électrode (17), qui suit de très près le faisceau laser (11) qui sert à enlever la couche diélectrique (15)

9. Procédé selon la revendication 8,
caractérisé en ce que
l'électrode (17) qui produit l'arc électrique est utilisée avec une buse (18) pour gaz de protection, biseautée au voisinage du faisceau laser.

10. Procédé selon l'une des revendications 1 à 9,
caractérisé en ce que
l'on fait fonctionner l'arc électrique (12) avec un courant continu ou avec un courant alternatif avec une fraction de courant continu prépondérante.
